# FASCICULE DE BREVET EUROPEEN

(11) **EP 1 095 193 B1**
(45) Date de publication et mention de la délivrance du brevet: **21.12.2011**
(21) Numéro de dépôt: 99946221.1
(22) Date de dépôt: 22.09.1999
(51) Int. Cl.: E04B 1/78

(54) **MATERIAU COMPLEXE DESTINE NOTAMMENT A L'ISOLATION THERMIQUE**
KOMPLEXES MATERIAL ZUR ANWENDUNG UNTER ANDEREM ALS WÄRMEDÄMMUNG
COMPLEX MATERIAL IN PARTICULAR FOR HEAT INSULATION

(30) Priorité: 23.09.1998 FR 9811988; 16.11.1998 FR 9814386; 03.05.1999 FR 9905678
(43) Date de publication de la demande: 02.05.2001
(73) Titulaire: Orion Financement, 75755 Paris Cedex 15 (FR)
(72) Inventeur: Riedel, Paul, 30420 Calvisson (FR)
(74) Mandataire: Cabinet BARRE LAFORGUE & associés
(86) Numéro de dépôt international: PCT/FR1999/002248
(87) Numéro de publication internationale: WO 2000/017460

(56) Documents cités:
- DE-A- 4 330 550
- DE-A- 4 424 328
- FR-A- 1 603 221
- FR-A- 2 516 202
- FR-A- 2 726 886
- FR-A- 2 763 616
- FR-A- 2 765 304
- GB-A- 464 529
- PATENT ABSTRACTS OF JAPAN vol. 015, no. 197 (C-0833), 21 mai 1991 (1991-05-21) & JP 03 051350 A (KAWAMURA SENI KOGYO KK), 5 mars 1991 (1991-03-05)

## Description

La présente invention concerne un matériau isolant complexe comportant plusieurs couches soudées entre elles. Le terme complexe utilisé dans ce contexte doit être interprété comme signifiant que le matériau est composé de plusieurs couches différentes selon une structure stratifiée. Le matériau est destiné notamment, mais non exclusivement, au bâtiment, par exemple pour l'isolation de toitures.

Dans le cadre de l'invention, le terme isolant s'applique selon les cas à l'isolation thermique, ou l'isolation phonique, ou encore à l'isolation contre l'incendie selon l'application envisagée.

Un souci actuel dans la conception de matériaux d'isolation dans le bâtiment est le contrôle de l'hygrométrie de l'espace couvert, l'isolation phonique (par exemple lorsque le matériau est utilisé en association avec une cloison, et la protection contre l'incendie. Dans ce dernier cas, il convient non seulement d'isoler des espaces contre des flammes, mais également d'assurer qu'aucun dégagement de substance nocive ne se produise lorsque lé matériau est exposé à la chaleur.

Une bonne isolation doit permettre non seulement de réduire les pertes de chaleur de l'intérieur vers l'extérieur, mais également d'assurer une bonne protection contre les excès de chaleur particulièrement constatés en sous-toitures en été, tout en créant une régulation des phénomènes de variation d'hygroscopicité et d'humidité à l'intérieur du bâtiment occupé.

L'isolation des bâtiments est traditionnellement effectuée avec des isolants fibreux : laine d'amiante, laine de roche, laine de verre, laine dé céramique, etc..., dont les inconvénients commencent à être bien connus.

En effet, ces matelas de fibres sont totalement poreux, de sorte que la moindre différence de température provoque à l'intérieur des mouvements convectifs importants; en cas de vent ces isolants n'offrent aucune tenue puisque l'air se glisse entre les fibres et emporte toute la chaleur. Ces matelas de fibres sont également particulièrement hygroscopiques de sorte qu'ils absorbent l'humidité, ce qui réduit complètement leurs caractéristiques isolantes.

On connaît également les matériaux alvéolaires (polystyrène, polyuréthanne, etc....). Cces matériaux présentent moins d'inconvénients que les laines minérales mais offrent toujours l'inconvénient de l'épaisseur, car ils arrêtent d'abord l'énergie transmise par conduction.

Les matériaux isolants traditionnels ne présentent aucune protection contre les fuites d'eau toujours présentes sous les toitures.

Par ailleurs, les matériaux traditionnels ignorent totalement les transmissions par rayonnement; ces matériaux en plus sont parfaitement adaptés à l'isolation des paillasses de laboratoires, mais ne sont pas conçus prioritairement pour le bâtiment.

En effet, les normes prévoient que les matériaux doivent être homogènes. Or, dans un bâtiment, l'homogénéité est rarement obtenue. Les normes prévoient également que l'échange thermique doit être stationnaire alors que dans un bâtiment les échanges de chaleur ne sont jamais ni stationnaires, ni unidirectionnels, ni constants, ni permanents.

Les normes ont prévu que les isolants seront préalablement desséchés, ce qui permet d'obtenir dans le laboratoire des caractéristiques d'isolation qui n'ont rien à voir avec celles que l'on constate sur le bâtiment où rapidement les isolants sont humidifiés.

On sait en outre que dans une maison d'habitation particulière habitée, 60 % de l'énergie destinée au chauffage est consommée par la toiture.

On sait aussi que les isolants thermiques traditionnels utilisés pour l'isolation des toitures habitées présentent un certain nombre de défauts ou d'insuffisances ne leur permettant pas de réduire les transferts thermiques dans toutes les conditions de fonctionnement d'une toiture d'habitation habitée.

Par exemple, une toiture est toujours en hauteur et présente donc une prise au vent importante.

La pression du vent introduit l'air froid par toutes les jointures de l'isolant exposé face au vent.

Symétriquement, la dépression constatée sur la toiture située dos au vent, extrait l'air chaud par toutes les fissures et raccords inévitables non seulement entre les panneaux ou rouleaux d'isolants, mais également à toutes les liaisons avec les éléments du bâtiment : murs périphériques, charpentes, sommets, etc...

Par exemple une toiture est toujours tôt ou tard le lieu de fuites d'eau. L'eau dégrade définitivement les isolants fibreux hydrophiles comme la laine de verre, la laine de roche, etc... ; ces fuites provoquent en outre des salissures dans le parement intérieur de l'habitation.

Si les isolants alvéolaires : polystyrène, polyuréthanne, sont moins sensibles à ces inévitables défauts des toitures, ils n'en perdent pas moins une partie de leurs caractéristiques lorsqu'ils sont mouillés.

L'expérience du chantier montre qu'il est extrêmement difficile de localiser une fuite par l'intérieur; la réparation de la fuite nécessite dans là majorité des cas des travaux de découverture de surfaces beaucoup plus importantes que celles de la fuite, d'où intervention et risque de création de nouvelles fuites.

Tous les professionnels de la toiture qui ont l'expérience du chantier, savent que les isolants situés sous la toiture sont inévitablement et constamment le lieu des mêmes condensations que celles que l'on rencontre au-dessus de la couverture.

Ainsi, quoi que l'on fasse, les isolants thermiques des toitures sont maintenus en état d'humidité permanente, ce qui présente plusieurs inconvénients graves : non seulement celui de la pourriture de la charpente, mais la constitution d'un milieu humide favorable à la prolifération des xylophages.

Certes, il existe des écrans d'étanchéité pour les toitures.

Non seulement la pose de ces écrans d'étanchéité augmente le prix de manière importante, mais surtout ces écrans d'étanchéité exigent la présence d'une lame d'air ventilé qui ne supprime pas les condensations inévitables constatées sous une toiture d'une habitation habitée.

Ces écrans d'étanchéité sont généralement constitués d'un non-tissé bitumineux.

Le raccordement parfait des les entre eux est pratiquement impossible.

On utilise également des écrans en polyéthylène généralement de récupération, et chargés pour en réduire le prix de revient. Cependant, les adhésifs habituels sur le marché n'adhèrent pas sur ce type de films.

La différence de rigidité entre l'écran et le ruban adhésif provoque inévitablement le décollement du ruban adhésif et donc la dégradation de l'étanchéité.

Les isolants utilisés en sous-toitures ne sont généralement pas destinés à être absorbants du rayonnement émis inévitablement par le dessous des tuiles en été. Les isolants traditionnels arrêtent l'énergie en l'absorbant, et grâce à leur faible masse, en la transmettant lentement.

Par ailleurs, on connaît le feutre ou la nappe en plumes d'oiseaux agglutinées décrit(e) par GB-464 529. La cohésion des plumes entre elles est réalisée par des gouttelettes d'adhésif maintenues en suspension dans une enceinte fermée à l'intérieur de laquelle on dissémine des plumes. Le feutre obtenu peut être recouvert, sur une face, d'une enveloppe. Aucun procédé n'est cependant fourni par GB-464 529 pour l'assemblage dudit feutre et de ladite enveloppe.

On connaît également le matériau d'isolation en laine décrit par DE-4424328. Ce matériau est constitué de fibres de laine brute mélangées à des fibres synthétiques thermoplastiques (fibres en polyéthylène, en polyamide, fibres bicomposantes) adaptés pour pouvoir se lier entre elles et avec les fibres de laine après un cycle de chauffage et de refroidissement. Ce matériau en laine, de structure cohérente et de bonne tenue interne, peut être recouvert d'une enveloppe de protection. DE-4424328 ne fournit cependant aucun procédé pour réaliser cet assemblage.

Dans l'état de la technique, la soudure de matériaux hétérogènes entre eux est pratiquement impossible, ce qui exclut des combinaisons de couches dans le cas d'une structure isolante où les couches sont soudées.

Au vu de ces problèmes, la présente invention propose un matériau isolant complexe, par exemple pour les sous-toitures ou les parois, conformé à la revendication 1.

Grâce à cette disposition, il devient possible d'exploiter des matériaux fibreux d'origine animale, tel que de la laine, dans une structure soudée.

La présente invention telle que définie permet d'être combinée de manière optionnelle avec une ou plusieurs des caractéristiques suivantes dans la mesure de leur compatibilité, l'étendue de la protection étant toutefois déterminée par la teneur des revendications :
- le matériau hygrorégulateur est de la laine ;
- la laine est de la laine noire crépue ;
- le matériau hygrorégulateur est à base de plumes d'oiseaux ;
- le polypropylène « cast » est thermolié autour des fibres constitutives du matériau hygrorégulateur ;
- la couche hygrorégulatrice est aiguilletée sur au moins une partie de sa surface afin de présenter une prépondérance de fibres orientées perpendiculairement au plan général de la couche ;
- les parties aiguilletées de la couche hygrorégulatrice sont disposées sur un support réfléchissant ;
- le matériau comporte au moins une couche métallisée ;
- la couche est métallisée sur un support en polypropylène « cast » ;
- la couche est métallisée sur ses deux faces ou est en métal massif ;
- le ou chaque film métallique est recouvert d'un matériau fusible de protection permettant également la soudure du film ;
- le matériau comporte en outre une pluralité de couches de matériau alvéolaire ondulées ;
- le matériau comporte en outre une pluralité de films à bulles dont l'épaisseur est de l'ordre de 0,75 mm à 8 mm, et de préférence 2 mm à 5 mm ;
- le matériau, utilisé en sous-toiture, comporte un film absorbeur du rayonnement thermique sur la face destinée à être tournée vers la toiture ;
- le film absorbeur est disposé au-dessus d'un film à bulles, lui-même disposé au-dessus d'un film métallique massif ;
- la couche hygrorégulatrice est soutenue par une grille de maintien dont le maillage présente une ouverture de 5 mm à 50 mm et de préférence de 10 mm à 12 mm ;
- les parties du matériau isolant en dehors des bords ne sont soudées que par points successifs séparés, de façon à limiter les ponts thermique ;
- le matériau comporte en outre une couche de matière adhésive tournée vers l'extérieur, destinée à piéger des particules de matériau nocives ;
- le matériau incorpore une résistance électrique de chauffage à proximité de la face destinée à être tournée vers l'intérieur ;
- le matériau comporte un complexe d'isolation contre les flammes comportant une succession de films métalliques minces séparés entre eux par des grilles fusibles établissant des lames d'air ;
- au moins un des films métalliques ou une des couches métallisées est relié électriquement à la terre ;
- le matériau comporte une alternance de films métalliques et de matelas de fibres non combustibles ;
- le matériau comporte des couches de matériaux ignifuges hydratées à base de minéraux poly-hydratés, comme le poly-hydroxyde d'aluminium, le gypse, le borax hydraté, le sulfate de calcium hydraté, le silicate de magnésium hydraté, le silicate de sodium et les sulfates d'aluminium ;
- les couches ignifuges sont retenues entre des films métalliques étanches ;
- le matériau comporte un ensemble de couches d'isolant séparées par des strates successives étanches réalisées par des films séparateurs métalliques ;
- les couches d'isolants sont composées de matériaux mutuellement différents afin de rompre la cohérence dans la transmission des énergies radiatives internes ;
- et les films séparateurs sont gaufrés.

L'invention concerne également un procédé de fabrication d'un matériau isolant complexe soudé tel que défini ci-dessus, caractérisé en ce que la soudure est réalisée par des molettes de soudure motrices.

De préférence, les molettes sont crantées, permettant d'obtenir une succession de points soudés séparés par des parties non soudées.

Avantageusement, on peut rendre active l'enclume des têtes génératrices d'énergie de soudure afin de permettre de mettre l'enclume de la tête de soudure en résonance avec la tête principale.

L'invention sera mieux comprise et les avantages qui en découlent apparaîtront plus clairement à la lecture de la description des modes de réalisation préférés de l'invention, donnés purement à titre d'exemples non limitatifs, par référence aux dessins annexés dans lesquels :
- la figure 1 est une vue en coupe schématisée d'une structure isolante multicouche selon un premier exemple de l'invention ;
- la figure 2 est une vue en coupe d'une première variante du matériau selon un deuxième exemple de l'invention ;
- la figure 3 est une vue en coupe d'une partie du matériau montrant une structure laminaire isolante selon une première variante du deuxième exemple de l'invention ;
- la figure 4 est une vue en coupe d'une partie du matériau montrant une structure laminaire isolante selon une deuxième variante du deuxième exemple de l'invention ;
- la figure 5 est une vue en coupe d'une première alternance de matériaux utilisée conformément à la présente invention; et
- la figure 6 est une vue en coupe d'une seconde alternance de matériau utilisée conformément à la présente invention.

L'invention sera maintenant décrite par le biais de trois exemples de base avec leur variantes. Chaque exemple reprend des caractéristiques communes de l'invention en les adaptant pour des applications spécifiques. Il est bien entendu que de nombreuses variantes sont envisageables pour chaque exemple tout en restant dans le cadre de la présente invention. Par ailleurs on comprendra que les enseignement donnés dans le cadre d'un exemple sont sensés s'appliquer de façon correspondante aux autres exemples.

### Exemple 1 : structure multicouche isolante destiné notamment au sous-toitures.

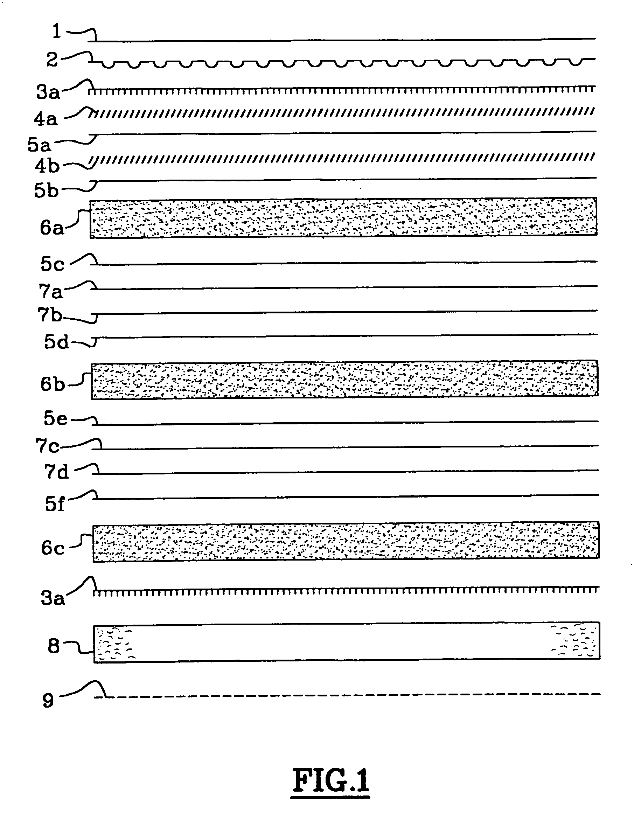

La structure selon cet exemple est représentée schématiquement à la figure 1.

Elle comporte des couches de matériaux hétérogènes, à savoir successivement :
- une couche supérieure 1, destinée à être tournée vers une toiture, comprenant un film absorbant noir, par exemple du polyester ;
- un film à bulles 2 ;
- un premier film en aluminium massif 3a ;
- une première couche de matière insonorisante 4a ;
- un premier film réflecteur métallisé sur ses deux faces 5a ;
- une deuxième couche de matière insonorisante 4b
- un deuxième film réflecteur métallisé sur ses deux faces 5b ;
- une première couche de ouate 6a ;
- un troisième film réflecteur métallisé sur ses deux faces 5c ;
- un premier séparateur alvéolaire 7a ;
- un deuxième séparateur alvéolaire 7b ;
- un quatrième film réflecteur métallisé sur ces deux faces 5d ;
- une deuxième couche de ouate 6b ;
- un sixième film réflecteur métallisé sur ses deux faces 5e ;
- un troisième séparateur alvéolaire 7c ;
- un quatrième séparateur alvéolaire 7d ;
- un septième film réflecteur métallisé sur ses deux faces 5f ;
- une troisième couche de ouate 6c ;
- un troisième film en aluminium massif 3c ;
- une ouate de laine 8 ; et
- une grille de protection et de renfort 9.

Dans ce qui suit, on omettra de citer la lettre qui suit le chiffre dans le repère à la figure 1 lorsque la couche est décrite de manière générique sans tenir compte de sa position relative dans la succession de strates.

Les films métalliques 3 ou métallisés 5 dans la structure jouent le rôle non seulement de séparateurs, mais de perturbateurs du rayonnement résiduel et différentiel entre les différentes strates et les différentes couches de films métallisés.

Les isolants comportant des films métallisés jusqu'à maintenant utilisaient des films polyester métallisés sur une seule face.

Le polyester présente l'inconvénient de retenir l'humidité beaucoup mieux que les films de polyoléfine hydrophobes que l'on fabrique actuellement, tels en particulier que le polypropylène.

Le polypropylène existe en polypropylène bi-orienté qui présente l'inconvénient de se déchirer. Dans une fabrication spéciale, il existe sous forme de polypropylène "cast" (coulé) qui présente non seulement l'avantage de ne pas se déchirer, mais surtout de rester visqueux lorsqu'on le fond, ce qui permet une soudure beaucoup plus aisée.

Aussi, l'exemple utilise avantageusement le polypropylène "cast" comme substrat pour les films réflecteur métallisés sur deux faces 5.

On note que jusqu'alors la totalité des isolants avec films réflecteurs intérieurs utilisaient des films métallisés sur une seule face. En métallisant les deux faces du substrat, on obtient pour le film 5 une meilleure réflectivité.

On sait en effet qu'un réflecteur travaille non seulement du fait qu'il est réflecteur, mais également du fait qu'il est non émetteur.

On sait également que l'énergie travaille dans les deux sens ; et qu'il est donc avantageux que le film soit réflecteur non émetteur sur ses deux faces. Seule la métallisation deux faces - ou l'utilisation d'un film en métal massif - doit porter ce résultat.

Il est intéressant d'utiliser pour les films réflecteurs métallisés 5 des films de polypropylène "cast" métallisés sur les deux faces, parce que ces matériaux sont souples et apportent une très bonne conformabilité du produit dans la mise en oeuvre, particulièrement en sous-toitures.

Il va de soi que sans sortir du cadre du présent brevet, on pourra utiliser des films de tout autre support métallisable, ou même des films de métal massif.

Depuis un certain nombre d'années, il existe sur le marché des isolants thermiques multicouches où on utilise comme séparateurs des ouates de polyester. On a donc un isolant thermique constitué d'un film réflecteur, d'une ouate de polyester, d'un film réflecteur, d'une ouate de polyester, d'un film réflecteur, etc...

Ces produits donnaient satisfaction, mais des études récentes ont montré qu'il était extrêmement intéressant de disposer des séparateurs entre les films réflecteurs 5, et que ces couches soient les plus différentes possibles dans leurs propriétés radiathermiques.

Il semble en effet qu'un réflecteur sera d'autant plus efficace, qu'il aura une plus grande proportion de rayonnement à renvoyer.

Si donc on utilise des ouates quasi transparentes comme les ouates en polyester, on aura semble-t-il moins de rayonnement à renvoyer que si l'on utilise des produits beaucoup moins transparents.

En utilisant des séparateurs non transparents, on augmente les énergies différentielles constatées entre les deux faces des films réflecteurs. On a donc le plus grand intérêt pour augmenter la perturbation radiathermique entre les différents films réflecteurs 5, à utiliser des ouates 6 et des séparateurs 7 qui soient le plus hétérogène possible. Cela permet en particulier d'augmenter l'élasticité, la résilience mécanique utile pour un isolant du bâtiment, et ainsi de répondre aux conditions de pose ou d'emploi particulièrement difficile.

L'hétérogénéité des couches et des matériaux constituant les ouates pourra être recherchée dans le choix de la matière des fibres, de la couleur des fibres, et de la texture des fibres, du diamètre de l'orientation des caractéristiques générales des fibres ou des séparateurs utilisés, etc.

L'utilisation des ouates comme jusqu'alors présentait certains inconvénients et en particulier celui que les ouates peuvent être écrasées très facilement, ce qui peut constituer un pont thermique toujours gênant.

Pour résoudre ce problème on utilise en plus des ouates, des couches de mousse de matière plastique alvéolaire 7 de faible épaisseur.

Avec une épaisseur massive de 3 mm, on a constaté qu'on a des résultats beaucoup plus intéressants si on utilise deux épaisseurs de 1,3 mm ou mieux encore trois épaisseurs de 0,8.

De plus, ces couches de mousses très fines 7 sont beaucoup plus facilement conformables dans leur utilisation et dans leur mise en couvre, pour suivre les irrégularités des charpentes.

De préférence, au lieu d'utiliser des mousses de matière plastique alvéolaire lisse, on utilise des mousses de matériaux alvéolaires ondulés. Ainsi, on constitue des irrégularités d'émission des rayonnements radiathermiques qui partent dans tous les sens et ont plus de chances de tomber en interférence.

Avantageusement, les matériaux alvéolaires sont différents d'une couche à la suivante. En effet, on constate une meilleure réduction des transferts thermiques lorsqu'on utilise deux matériaux différents c6te à côte.

Par exemple, on a de meilleurs résultats si on utilise une couche de mousse de polyéthylène et une couche de mousse de polystyrène superposées, que si on utilisait deux couches de mousse de polyéthylène ou deux couches de mousse de polystyrène superposées de la même épaisseur.

L'association de mousses et des ouates 8 donne des résultats particulièrement remarquables, en raison non seulement de l'hétérogénéité thermo-radiative, de l'hétérogénéité mécanique, mais surtout parce que sans que l'utilisation des mousses et des ouates, donne une plus grande continuité des résultats des réductions de transferts thermiques sur une plus vaste plage de températures.

En ce qui concerne les ouates et les matériaux fibreux, on utilisait jusqu'alors des matériaux fibreux qui étaient encollés par pulvérisation de colle de urée formol, formol, phénol, acétate et autres.

L'inconvénient de ces colles est qu'elles prennent l'humidité et se dégradent avec le temps et les variations d'hygrométrie.

On utilisera donc selon l'exemple, pour lier les fibres entre elles, la technique du thermoliage. Pour cela, au lieu d'introduire de la colle, on répartit régulièrement dans la ouate, des fibres ou des particules de matières thermofusibles telles que polyester, polypropylène, et autres matières plastiques hydrophobes existant en fibres, ces fibres hétérogènes présentant l'avantage également d'avoir des propriétés thermo-radiatives différentes.

Les fibres particulièrement intéressantes sont composées de deux couches de matière plastique extrudées ensemble en fibres telles que: co-polyester, copolyamide, co-polioléfine. Cette technique consiste à extruder autour d'une fibre de matériaux choisis, une autre couche de matériaux a très bas points de fusion; on a ainsi des fibres bi-composants dont l'extérieur permet d'assurer la liaison par soudure des fibres l'une à l'autre, et l'intérieur des caractéristiques mécaniques et radia-thermiques différentes.

Ainsi, il est possible d'utiliser comme base fibreuse destinée à être enrobée de la laine de mouton thermoliée 8.

Jusqu'alors on savait faire des ouates et des matelas de laine de mouton par fixation mécanique par aiguilletage ou par encollage, mais on n'avait jamais utilisé un mélange de fibres thermofusibles incorporées dans la laine de mouton, de façon à pouvoir attacher ensemble les fibres de laine de mouton.

La laine de mouton est en effet particulièrement intéressante en raison de ses caractéristiques d'isolation thermique, de stabilité au feu, et surtout de maintien d'une humidité constante.

La laine de mouton est aussi intéressante car elle est bien connue, mais il est évident qu'on peut utiliser sans sortir de la présente invention, toutes fibres animales quelles qu'elles soient.

On pourra également utiliser comme séparateurs, des couches de films à bulles transparents généralement fabriqués en polyéthylène 2.

Les films à bulles généralement utilisés ont une bulle de 7 mm de diamètre pour une épaisseur de 5 mm. Pour l'isolation thermique du bâtiment, l'exemple utilise des films à bulles de très faible épaisseur.

En effet, ce qui compte ce n'est pas l'épaisseur globale, mais l'espace existant entre les différentes surfaces desquelles le rayonnement doit sortir pour transmettre l'énergie.

Ainsi, on utilisera de préférence des films à bulles dont l'épaisseur sera de 0,8 mm à 4 mm, avec un diamètre compris entre 2 mm et 5 mm et si possible en espaçant les bulles, de façon à avoir le minimum de points de contacts possibles, pour réduire les transmissions par conduction et augmenter les transmissions par rayonnement.

Un espace optimum pour l'espace des bulles, est un pas de 8 mm.

On a également constaté que l'utilisation d'un film à bulles de matières plastique chargé de colorant noir, donnait de meilleurs résultats que l'utilisation d'un film à bulles simple transparent.

La structure comporte en outre un isolant mince absorbeur de l'énergie phonique 4.

Ce séparateur isolant phonique remplit également le rôle de séparateur isolant thermique.

Comme exposé précédemment dans le domaine thermique, on constate également que l'on a un meilleur résultat si on utilise des matériaux les plus hétérogènes possibles; on constate qu'on a une meilleure réduction des transferts d'énergies phoniques et autre, si les matières, les structures, les couleurs, les diamètres, les compositions, les orientations des fibres des matelas d'isolation phonique et autres, sont les plus différentes possibles.

Comme pour la mousse d'isolation thermique, il est plus intéressant de disposer deux couches minces qu'une seule couche d'une épaisseur équivalente à deux couches minces.

Une des caractéristiques de l'exemple est que le matériau comporte un certain nombre d'accessoires destinés à le rendre particulièrement adapté aux contingences de l'utilisation dans les habitations habitées. On sait en particulier qu'une toiture n'est jamais étanche et que tôt ou tard, une toiture arrivera à fuir; la totalité des isolants thermiques du bâtiment existant actuellement sont détruits ou gravement endommagés par l'arrivée d'une fuite d'eau.

Aussi, la structure comporte une couche de matériau 1 qui est totalement étanche à l'eau et solide mécaniquement pour pouvoir également résister aux coups de vent et autres efforts dus à la mise en oeuvre par le personnel disponible sur le bâtiment.

De préférence, ce film 1 est totalement noir en sous-toiture.

Jusqu'alors on utilisait en sous-toitures un film réflecteur qui renvoyait le rayonnement vers la tuile ou vers l'ardoise.

Ces films réflecteurs étaient rapidement ternis et perdaient une bonne partie de leurs caractéristiques.

Au contraire, on utilise dans l'exemple un film noir directement sous la toiture et sous la couverture.

Ainsi, ce film noir 1 voit directement l'ardoise, et reçoit directement le rayonnement infrarouge émis par la tuile ou la couverture.

Ce film noir absorbe ce rayonnement et s'échauffe très rapidement; étant plus chaud il va communiquer sa chaleur par conduction à l'air présent, l'air va se dilater, devenir plus léger et commencera un mouvement de convection naturelle. On constituera ainsi une circulation d'air plus importante sous la toiture; cette circulation d'air évacuera la chaleur absorbée aussi bien par la tuile que par le film noir. Ainsi, l'isolant noir 1 apportera une réduction de la chaleur absorbée donc un meilleur confort des combles et des éléments du bâtiment situés en dessous.

Pour cela, le mieux est d'utiliser un film noir chargé au noir de carbone, au goudron, ou autre matériau étanche.

On sait qu'une toiture est tôt ou tard amenée à fuir, que les condensations en sous-toitures sont importantes, et qu'il peut y avoir des introductions d'humidité sous forme de remontée de neige poudreuse, d'embruns ou de pluie en cas d'orage.

Aucun film n'est totalement étanche à terme a ce genre de pénétration d'humidité et de condensation. Pour cette raison, on dispose en dessous de ces films protecteurs 1, un film à bulles simple 2 qui comporte une succession d'aspérités et de protubérances.

En cas de fuites ou d'introduction d'eau, le liquide pourra s'écouler entre ces protubérances sans être absorbé et rejoindre le bas la toiture ou la gouttière sans rester sur place en maintenant une humidité toujours néfaste et préjudiciable au bâtiment, particulièrement à la charpente.

En effet, des expériences répétées ont montré que l'humidité vapeur avait tendance à se condenser derrière les isolants, particulièrement en sous-toitures.

En raison des variations de températures très importantes. Les films de matière plastique généralement utilisés, même métallisés, ne sont pas complètement étanches. Pour cette raison, la structure comporte en outre un film métallique massif 3.

Les deux faces du film 3 sont libres de façon à pouvoir utiliser non seulement leurs caractéristiques d'étanchéité, mais surtout de profiter des caractéristiques réflecteurs non émetteurs de l'aluminium. Il va de soi que ces films métalliques pourront avoir leurs surfaces protégées de la corrosion par tous moyens connus de l'homme de l'art.

De préférence, on protège les films métalliques en utilisant une couche de matière plastique ou de matériau qui pourra être fusible et soudable de façon à pouvoir assurer la liaison avec les autres composants.

Une des caractéristiques des bâtiments d'habitation et des locaux occupés, est que les conditions d'humidité intérieure varient en permanence en raison du dégagement d'humidité que provoque toute activité humaine ou présence d'êtres vivants. Pour compenser la présence de cette humidité et éviter qu'elle ne pénètre dans les matériaux, les isolants traditionnels se contentent de mettre en place un pare-vapeur plus ou moins efficace; on connaît le peu d'efficacité des papiers goudronnés qui servent surtout de supports mécaniques aux laines de verre, et le peu d'efficacité des autres pare-vapeurs utilisés sur des matériaux alvéolaires.

On sait également que l'humidité pénètre sur les cotés dans les isolants fibreux minéraux habituels, de sorte que très rapidement ils perdent une très grande partie de leurs caractéristiques isolantes.

Aussi, la couche 8 plus proche de l'habitation située à l'intérieur, sera constituée d'un matelas de fibres ou de produits non hydrophobes, susceptibles d'absorber et de restituer une certaine quantité d'humidité). A ce titre, la laine de mouton présente des caractéristiques tout à fait intéressantes de régulation de l'humidité.

On constate en effet que lorsqu'on dispose dans une maison une couche de laine de mouton à l'intérieur, le taux d'humidité de l'air de la pièce est pratiquement constant. Un autre isolant qui semble pouvoir donner une telle régularité est le chanvre, qui sera considéré ici comme fonctionnellement équivalent à la fibre animale.

De façon à maintenir une humidité relative la plus régulière possible, on disposera sur la couche inférieure de l'isolant une couche de matériau hydrophile, et particulièrement de laine animale telle que la laine de mouton.

Un avantage de la mise en place d'une couche de laine de mouton, est que l'on a également une absence totale d'électricité statique, une bonne réduction des charges électromagnétiques puisque les charges et tensions éventuelles constatées lorsqu'il fait sec, sont éliminées par les films métallisés ou métalliques étanches 3 et 5 en proximité des matériaux hydrophiles mis en place grâce aux méthodes de fixation décrites ultérieurement.

Pour protéger la couche de laine 8, la structure comporte une grille de matière plastique 9 ou de tout autre matériau ayant une maille d'une ouverture minimum de 5 mm et maximum de 50 mm avec une préférence pour une maille de 10 à 12 mm environ. Pour éliminer les charges électrostatiques qui pourront apparaître à l'intérieur de la pièce, on prévoit un matériau électro-conducteur.

Du fait que la couche de laine est susceptible de rester humide, la structure prévoir un film métallique 3a en métal massif comme l'aluminium juste derrière.

De façon à pouvoir assurer la soudure décrite ultérieurement, ce film métallique 3a sera complexé avec un film de matière fusible et soudable. L'aluminium est très fragile et se déchire, et a besoin d'être complexé. Dans l'exemple, on utilise donc la matière de complexage et de renfort de l'aluminium comme matière de soudure et comme matière de protection de l'aluminium contre la corrosion.

Une des faiblesses des isolants traditionnels constatés, est l'impossibilité d'obtenir l'étanchéité aux courants d'air, ce qui donne la sensation de froid. Les matériaux ordinaires: laine de verre, laine de roche, plaques de polystyrène ou de polyuréthanne, ne permettent pas d'obtenir une étanchéité absolue aux courants d'air, au vent, à l'invection et à l'évection du vent.

La structure selon l'exemple permet de compenser cette faiblesse en disposant sur chaque côté de chaque lé, un système d'accrochage permettant de fixer un lé à l'autre. De la sorte, on obtient une étanchéité non seulement à l'eau de ruissellement, mais aux courants d'air, à la vapeur d'eau, aux condensations.

Ce système d'accrochage et de fixation d'un lé sur l'autre pourra être un ruban adhésif double face, un des côtés de l'adhésif double face étant fixé sur le film noir du dessus, l'autre face de l'adhésif étant protégée par un papier de protection qu'il suffit d'enlever au moment de la pose.

Selon une variante, le système de fixation pourra être constitué d'un ruban auto-agrippant tel que le "velcro" (marque déposée) ou tout autre système de ruban auto-agrippant, avec une préférence pour l'utilisation d'un crochet et d'une maille velours en non tissé; le velours non tissé offre l'avantage d'être économique, mais l'inconvénient de ne pouvoir pas être utilisé plusieurs fois. Dans l'application visée, il est très intéressant d'avoir la fixation mécanique la plus forte pour pouvoir n'utiliser le produit qu'une seule fois. Pour cela, on utilise de préférence un velours dont on n'a pas coupé la boucle.

A titre d'exemple, on disposera sur l'un des côtés de l'isolant une bande de 5 cm et sur l'autre côté une bande de 10 cm; le produit le plus économique étant livré dans la largeur la plus importante.

L'assemblage des différents composants de ce type d'isolant, a jusqu'à présent était réalisé par des machines à coudre multi-aiguilles. Ce type de fixation présente l'inconvénient que les produits sont troués, chaque trou étant le lieu possible de l'introduction soit d'eau de ruissellement provenant des fuites du toit, soit d'eau de condensation provenant des variations atmosphériques.

Dans l'exemple, les différentes couches sont assemblées par soudure, cette technique ayant l'avantage de supprimer toutes les pénétrations d'eau et d'air possible aussi bien dans l'épaisseur du produit que par le côté. On pourra utiliser tous les types de soudures existantes, le principe de la soudure consistant à chauffer les composants entre eux pour que la matière fonde et devenant liquide, adhère aux principaux produits.

Il va de soi que si l'on utilise une laine de mouton, on ne pourra pas obtenir la soudure; il est connu également que certains matériaux ne sont pas soudables entre eux. Pour cela, conformément à la présente invention, on incorpore des matériaux fusibles restant visqueux qui pourront ainsi interpénétrer les produits non soudables pour assurer une interfixation des couchés soudables au travers des couches non soudables.

A cette fin, on utilise du polypropylène « cast » en raison du fait que ce matériau fond à basse température, et présente une viscosité très importante, ainsi il ne fuit pas sous la pression de la tête de soudure, mais reste en place. Il offre également l'avantage d'être totalement insensible aux modes de chauffage des têtes de soudures, que cela soit par induction, par haute fréquence, par ultrasons, par micro-ondes ou par tous autres moyens ; il semble être sensible seulement à la chaleur dégagée.

C'est donc la chaleur dégagée par les composants en présence, qui fait fondre le ruban de soudure. Cette propriété est encore plus marquée lorsqu'on utilise un ruban métallisé ou métallique.

Pour faciliter la soudure de l'ensemble et l'association des différents composants, on ajoute juste à l'endroit des soudures, un ruban de matière additionnelle qui est mis en place uniquement pour permettre la soudure.

Ceci permet ainsi de n'avoir de matière complémentaire onéreuse destinée à la soudure,

Selon la présente invention, on utilisera, pour la soudure de la couche hygrorégulatrice, un ruban de polypropylène « cast » qui présente une viscosité importante dès qu'il commence à fondre.

On pourra par ailleurs également utiliser, pour d'autres couches, un ruban de film métallisé ou métallique qui offre l'avantage de dynamiser les ondes qui sont envoyées pour la soudure.

Un avantage également de l'utilisation d'un ruban métallique, est que l'on constate que la soudure ne provoque pas la découpe ou le sectionnement des composants sous la tête de soudure.

On sait également que l'humidité a tendance à rentrer sur les bords de tous les isolants. Or, grâce à cette disposition, le complexe isolant sera complètement soudé sur les bords et totalement étanche. De la sorte l'humidité ne pourra pas pénétrer latéralement dans l'isolant et en détruire les caractéristiques.

Avantageusement, de façon à pouvoir maintenir les composants ensemble sur une grande largeur, on ne soude le centre que par points successifs de façon à réduire les ponts thermiques.

Il est connu que les systèmes de soudure, tels que la soudure à ultrasons, sont très souvent utilisés pour la découpe des matériaux. L'utilisation de têtes d'ultrasons standards provoque le même défaut et réduit considérablement les caractéristiques mécaniques de la soudure. Pour éviter cette difficulté, on rend les molettes de soudure motrices. De la sorte, l'énergie de la soudure est transmise au matériau sans aucun effort qui pourrait provoquer la découpe.

Pour éviter encore plus le risque de découpe, il est proposé de cranter les molettes tournantes. Ainsi, au lieu d'avoir une ligne continue de soudures, on a une succession de points séparés par des zones non soudées, les points étant obtenus par la pointe des molettes et les zones non soudées par l'intervalle cranté, des molettes de soudure.

Il est également possible de rendre active l'enclume des têtes génératrices d'énergie; un réglage précis permet en effet de mettre l'enclume de la tête de soudure en résonance avec la tête principale. Ceci est particulièrement intéressant dans le cadre de la soudure du complexe décrit dans le présent exemple, en raison de son hétérogénéité. Toutefois, cette technique s'applique aussi aux autres exemples.

### Exemple 2 : structure isolante avec propriété pare feux

Cette structure est destinée à la protection contre les inconforts, et également contre la propagation du feu dans les habitations et tout autres locaux. Cette structure permet notamment d'assurer le confinement de tous les matelas, flocages et les couches en fibres amiante, fibres de verre, et autres matériaux dangereux ou toxiques.

On a utilisé pendant longtemps les fibres d'amiante et autres fibres minérales comme protection contre l'incendie, comme décoration, comme isolation thermique.

On sait aujourd'hui qu'il est particulièrement difficile de désamianter les surfaces traitées, et encore plus difficile de traiter chez les particuliers, les chantiers en laine de verre présents partout.

On sait également le danger que présente le travail de déposer les flocages d'amiante et les matelas de fibres minérales.

Pour se protéger des dangers de ces matériaux, on a mis en route l'arrachage de des couches, ce qui augmente encore le danger et les risques.

L'exemple propose une solution nouvelle au désamiantage et là la protection de tous les isolants en fibres minérales dans toutes les habitations et partout où il sont utilises.

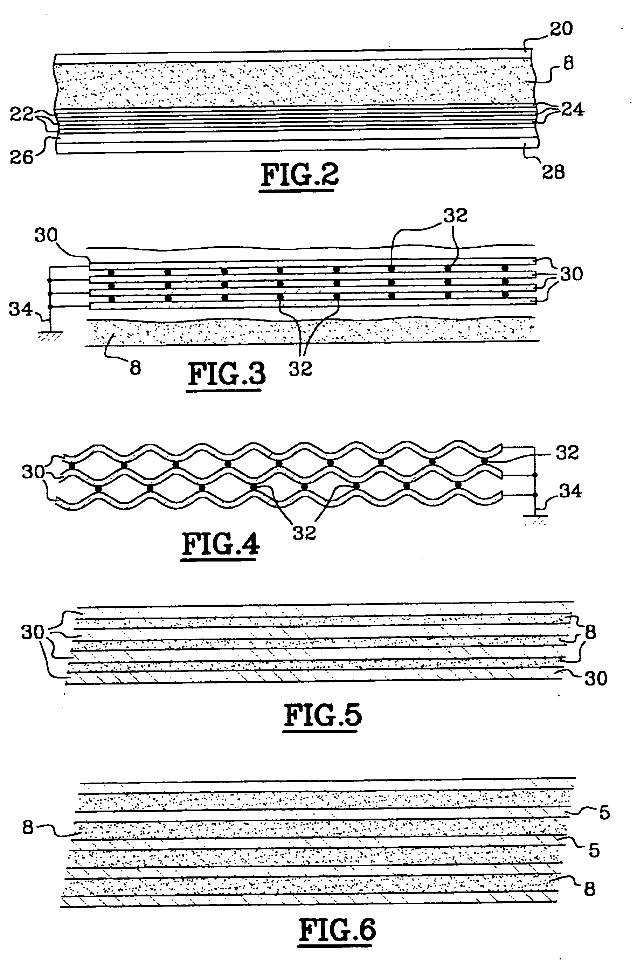

Pour cela, le produit composite comporte, comme le montre le figure 2, des fibres hydrophiles naturelles (ici de la ouate de laine) artificielles telles que les fibres animales en l'aine de mouton, plumes d'oiseaux ignifugées, et autres fibres hydrophiles, éventuellement artificielles.

On sait en effet que les fibres minérales telles que l'amiante et le verre sont dégradées par les variations d'humidité auxquelles elles sont soumises.

Pour en réduire la dégradation, il suffit de maintenir devant ces fibres un milieu dont l'hygroscopicité est constante et régulée.

Ainsi ces fibres ne seront plus soumises aux dilatations et rétreints dus à leur humidification et à leur dessèchement. Elles ne se sépareront plus en fibrilles cancérigènes et conserveront leurs dimensions d'origine. Les fibres selon cet exemple sont ignifugées de façon à présenter au moins une bonne résistance à l'incendie.

Pour ne pas alimenter le feu, il est préférable que ces fibres utilisées soient non seulement hydrophiles, mais qu'en outre elles présentent une très faible affinité avec l'oxygène pour ne pas alimenter le feu.

Afin de bloquer les dégagements de poussières d'amiante et autres fibres minérales qui pourraient survenir, le complexe selon la présente invention comporte une couche de matière adhésive, gluante, poisseuse 20 (figure 2) destinée à agripper, retenir, fixer les fibres qui pourraient éventuellement s'envoler et aller polluer l'atmosphère.

Ainsi on dispose le matériau selon devant les surfaces garnies de fibres minérales dont il faut se protéger ; le complexe est fixé avec le minimum de points de fixation possible.

Dès que les fibres minérales dangereuses se détachent, elles sont immédiatement piégées par la couche d'adhésif poisseux.

Ce type de matelas adhésif 20 peut-être fabriqué sur une machine poly-extrudeuse. Il suffit alors d'extruder le film d'adhésif sur un film métallique ou métallisé, ou sur tout autre support, où lieu de l'extruder sur un papier siliconé comme d'habitude.

Il est également possible d'ajouter dans le film de colle, des agents ignifugeants, gonflants et/ou intumescents.

Afin d'éviter le moindre contact mécanique entre le produit de protection contre l'amiantes et les fibres minérales avec justement ces fibres, la face qui sera en contact avec ces fibres dangereuses est avantageusement la plus souple possible. Elle sera de préférence constituée d'un matelas de fibres non minérales qui seront maintenues ensemble soit par les techniques habituelles de l'encollage ou de la thermo-fixation, soit et de manière préférentielle par l'aiguilletage.

En effet, l'aiguilletage est un procédé qui permet de disposer les fibres perpendiculairement au champ thermique ; ce qui offre l'avantage inattendu de réduire la transmission d'énergie par induction entre une surface chaude et une surface froide.

Dans une version privilégiée, l'aiguilletage ne se fera pas sur toute la surface, mais de préférence en bandes séparées par des zones non aiguilletées.

Les zones aiguilletées peuvent avoir par exemple une dimension de 30 mm et les zones non aiguilletées une dimension inférieure ou supérieure à 30 mm.

En variante, le complexe est simplement garni sur sa face avant par un tissu décoratif, de façon à rester souple et à ne pas provoquer d'efforts mécaniques sur le matelas de fibres toxiques à cloisonner.

Il est possible d'ajouter entre le premier matelas de fibres et le tissu décoratif 28 une succession de films métallisés 24 séparés par des strates isoréflectives 22 (figure 2).

Pour augmenter le confort, on peut ajouter derrière le tissu décoratif, une résistance électrique chauffante de grande surface 28, la résistance électrique aura une puissance entre 100 et 1000 Watts au m² avec une préférence pour 300 Watts au m². Cette résistance sera de préférence en cuivre de façon à pouvoir assurer toutes les liaisons électriques par soudure.

Pour la version plus industrielle de la protection, selon la présente invention, on remplacera le tissu décoratif par un textile d'aspect qui apportera les protections et caractéristiques demandées pour la protection particulière.

Dans une version tout à fait privilégiée, la laine de mouton apporte l'isolation thermique, garantit surtout une régulation de l'humidité particulièrement intéressante. Cette régulation d'humidité sera appréciée dans les enceintes à forte variation de chaleur donc d'hygrothermie, telle que les capots de moteurs.

On sait en effet que l'air chaud contient beaucoup plus d'humidité que l'air froid et lorsque l'on refroidit de l'air, l'humidité, contenue dans l'air chaud condense, ce qui peut provoquer des corrosions et autres effets nuisibles.

Dans la version où le présent complexe est utilisé comme protection contre l'incendie, on dispose en face extérieure un film métallique ou de préférence une succession de films minces métalliques 30 massifs réflecteurs étanches (figure 3). Ces films métalliques 30 ont pour mission de répartir donc de refroidir la chaleur et de diminuer et retarder, éloigner le point d'ignition.

Ces films 30 ne seront pas massifs ou soudés entre eux comme on le fait jusqu'à maintenant, mais ils seront au contraire fixés par points 32, de façon à laisser entre chaque film une micro lame d'air où l'énergie sera obligé de se transmettre par rayonnement.

On s'aperçoit en effet de manière très surprenante que si l'on dispose par exemple cinq films d'aluminium de 10 microns d'épaisseur l'un derrière l'autre, et si l'on expose le premier film au chalumeau oxy-acéthylènique, le premier film est chauffé pour être pratiquement d'une couleur orange vif, alors que le dernier film au dos est à une température à peine supérieure à 100°C.

De préférence, l'espace optimal entre deux films métalliques doit correspondre au maximum de la distance du rayonnement infrarouge, ou à l'interférence dudit rayonnement infrarouge; soit à une distance de 10 microns à 1,5 cm.

Par contre, on constate que la conduction mécanique de la chaleur est proportionnelle à l'épaisseur totale.

On dispose donc devant l'isolant destiné à assurer la protection contre le feu une épaisseur suffisante de métal de façon à ce que la chaleur soit conduite et évacuée par conduction. En évacuant la chaleur par conduction, on diminue le point d'échauffement de la surface en contact avec le feu, et ainsi on réduit les risques d'inflammation.

Une épaisseur de 30 à 80 microns est favorable avec une efficacité tout à fait remarquable pour une épaisseur globale de 50 microns.

Ces films métalliques seront fixés entre eux de façon à toujours laisser un espace d'air d'un film à l'autre pour l'obliger l'énergie a se transmettre par rayonnement d'un film à l'autre.

Ils pourront être fixés ensemble soit par une grille fusible en matériau ignifugé, soit par des points de colle, soit par des points de soudure 32 qui ne devront pas percer ces films.

Ces films pourront être renforcés par un support mécanique adapté à l'emploi spécifique.

Dans la protection contre l'incendie, on utilisera de préférence un film d'aluminium. Les surfaces au dos ne seront pas protégées parce que lorsque le film métallique est chauffé, ce film va s'oxyder rapidement et va ainsi consommer non seulement l'oxygène disponible, mais encore consommer une partie de la chaleur pour cette réaction endothermique.

Afin d'obtenir un meilleur résultat d'isolation thermique selon les caractéristiques particulières de l'exemple, le film métallique pourra être embossé et gaufré, comme le montre la figure 4. Ceci augmente la surface du film et surtout provoque une dispersion des ondes émises et reçues.

Dans une version destinée à subir les agressions climatiques, la face extérieure du film métallique pourra être garnie d'un vernis anti-corrosion de façon à lui conserver ses caractéristiques réflectives.

Ce film extérieure pourra être parallèlement complexé sur un film plastique, minéral ou autre de façon à assurer le renfort mécanique et la résistance à la déchirure.

Dans une version particulièrement destinée à la protection contre l'incendie, le complexe isolant comportera une liaison électrique entre les films métalliques et la terre 34 (figures 3 et 4). On pourra le cas échéant utiliser la résistance électrique chauffante 24 pour effectuer cette liaison.

De manière surprenante, la demanderesse a découvert que le fait de mettre les films métalliques à la terre augmente les caractéristiques de résistance à la transmission de la flamme de l'ensemble du complexe.

Cette disposition agit non seulement pour éliminer toute l'électricité statique, et surtout toutes les énergies présentés en cas d'incendie, inflammation, mais surtout pour constituer une cage de Faraday, qui assurera la protection contre les ondes électromagnétiques qui font l'objet de craintes importantes dans le public.

La liaison a la terre 24 se fera par les techniques habituelles ne présentant aucune difficulté pour le spécialiste du bâtiment.

Les films d'aluminium présentent l'inconvénient d'être facilement déchirables et fragiles.

Aussi, pour en assurer la protection, on pourra mettre devant ces films métallique une garniture isolante, non étanche qui sera composée de matière non carbonée et difficilement combustible.

Ces matières ne devront pas avoir tendance à se combiner à l'oxygène, en dégageant de la chaleur comme le font les matières carbonées.

On pourra utiliser pour cela des fibres animales azotées telles que laine de mouton, plumes d'oiseaux. Ces différentes fibres seront éventuellement ignifugées et humidifiées.

En effet, la laine de mouton conserve pratiquement toutes ses caractéristiques isolantes lorsqu'elle est mouillée, et laine de mouton même mouillée conserve ses caractéristiques isolantes pour utiliser l'eau qui est dans la laine de mouton comme agent ignifuge.

L'avantage des fibres animales est que leur matière ne se combine pas à l'oxygène pour dégager de la chaleur, et que d'autre part lorsqu'on les chauffe, elles dégagent de la vapeur d'eau et de l'azote qui sont des gaz non toxiques et qui ont tendance à étouffer le feu.

Pour une bonne protection contre l'incendie, il est proposé de combiner une épaisseur de plusieurs films métalliques tels que décrits précédemment (figure 3 et 4), avec une garniture de fibres ou de matières non combustibles. Ainsi, comme le montre la figure 5, on aura un matelas qui sera composé par exemple d'un film métallique 30, d'une épaisseur de matière non combustible, d'un film métallique ou métallisé, d'une autre épaisseur de matière éventuellement non combustible, etc... Ces différents éléments peuvent être fixés entre eux par tous les moyens y compris la soudure par ultrasons.

On sait que lorsqu'on a échauffement, il y a dégagement de gaz, et on constate que ces gaz augmentent de volume, et on a tendance à percer les premiers films métalliques ramollis par la chaleur.

Pour éviter ce défaut grave en cas d'incendie, les volumes derrière les premier films seront de préférence non-étanches.

Dans ces volumes non-étanches, les gaz libérés par l'échauffement pourront circuler, s'évacuer et y effectuer leur expansion sans exercer de pression sur les parois métalliques fragilisées par la chaleur.

Cette paroi métallique ne sera pas crevée et, restant continue, elle offrira l'avantage de : maintenir à l'intérieur les gaz de la combustion qui sont eux-mêmes des gaz ignifuge, maintenir à l'intérieur la vapeur d'eau qui est un excellent ignifuge, interdire l'arrivée de l'oxygène nécessaire à la combustion. Lorsqu'on utilise des ignifugeants hydratés comme expliqué plus loin, la vapeur d'eau se dégage à l'intérieur et va se condenser en mouillant tous le matériaux plus froids rencontrés un peu plus loin, et de préférence au dessus puisque les gaz chauds montent comme la flamme.

L'utilisation de fibres animales est particulièrement intéressante car elles sont totalement non-toxiques et sont d'un prix de revient intéressant.

Aussi, il est possible de constituer un isolant thermique qui sera constitué d'une succession de matelas de fibres animales telles la laine de mouton, les plumes pures ou mélangées, associées avec interposition entre les différentes couches de films métallisés ou métalliques réflecteurs non émetteurs. Les proportions peuvent être modifiées dans n'importe quel rapport, de façon à s'adapter au mieux aux caractéristiques recherchées.

L'isolant peut comporter sur la face destinée à être à l'intérieur du bâtiment une couche de laine de mouton avec incorporation ou non de plumes. On constate en effet de manière très surprenante que lorsqu'on dispose un tel isolant, la couche de laine de mouton semble maintenir une régularité de l'humidité relative tout à fait étonnante.

On constate que l'humidité relative dans une pièce garnie d'un tel isolant, reste entre 40 et 50 %, alors que dans la même pièce isolée avec de la laine de verre, l'humidité relative varie de 40 à 85 % et dans la même pièce isolée avec du polystyrène expansé, l'humidité varie de 40 à 90 %. Il semble que la laine de mouton offre la caractéristique d'absorber et de relâcher lentement et progressivement l'humidité dans la pièce, ce qui maintient un équilibre de l'humidité relative et donc un confort remarquable et inconnu avec les autres moyens.

L'ignifugation des matériaux du bâtiment est actuellement obtenue par l'incorporation d'halogènes, de chlore, de brome, de phosphore et autres produit particulièrement toxiques.

Lorsqu'en cas d'incendie on chauffe ces composés halogènes, ceux-ci dégagent des gaz toxiques corrosifs qui vont vite aller asphyxier les être vivants situés à proximité. Pour éviter ce problème, il est proposé dans l'exemple de d'ignifuger les matériaux d'isolation thermique et autres avec de l'eau.

A cette fin, on on incorpore dans le matériau à ignifuger, des minéraux polyhydratés comme le poly-hydroxyde d'aluminium, le gypse, le borax hydraté, le plâtre (qui est un sulfate de calcium hydraté), le talc qui est un silicate de magnésium hydratés, le silicate de sodium, les aluns qui sont des sulfates de Potassium avec 24 molécules d'eau, les sulfates de sodium, les sulfates d'aluminium et autres sulfates : la diaspore, la gypsite, la bauxite, et tous les composés minéraux hydratés ou métalliques hydratés.

Les matériaux hydratés présentent la caractéristique remarquable que lorsqu'ils sont chauffés par réaction endothermique, ils exigent et absorbent beaucoup de chaleur : ce qui déjà réduit le point d'ignition et le risque de propagation de l'incendie. En plus, ces matériaux libèrent par modification de la structure cristalline, une quantité importante d'eau liquide ou en vapeur à la température la plus basse possible, avec le maximum de besoin de chaleur pour provoquer cette libération d'eau. A titre d'exemple, le gypse commence à dégager de l'eau à partir de 120°C, les Poly-hydroxydes d'aluminium à partir de 200°C, certains aluns à partir de 240°C. Ces matériaux tels que l'hydroxyde d'aluminium, lorsqu'ils sont chauffés, dégagent des ions positifs. Ces ions positifs tendent à se précipiter sur les matériaux chauffés pour s'y associer, et réagissent en tant que réducteurs de fumées.

Ces matériaux libèrent et dégagent de la vapeur d'eau gazeuse qui va aller diminuer la concentration en oxygène du milieu ambiant.

La réduction du milieu d'oxygène supprime la possibilité de combustion des composants en ;diminuant l'indice LOI (LOW oxygène index).

L'avantage d'ignifuger à l'eau est que la vapeur d'eau est un produit totalement non toxique.

Il apparaît également que dans les incendies sévères, on puisse arriver à décomposer l'eau en hydrogène et en oxygène séparés.

On sait que la combustion de l'oxygène et de l'hydrogène dégage énormément de chaleur. De la même manière la séparation de l'oxygène et de l'hydrogène absorbe énormément de chaleur et d'énergie, ce qui ne fait que retarder et réduire les conséquences du feu.

Les composants dans le cadre du présent exemple peuvent également être intumescente et gonfler comme le font les aluns. Ils constituent ainsi un matelas isolant thermique qui réduit les possibilités de transmission de la chaleur.

Cependant, le présent principe d'ignifugation fonctionne beaucoup mieux si les gaz peuvent rester à l'intérieur du matériau ou du complexe, et ne peuvent pas s'échapper dans l'atmosphère.

Pour cela, le matériau ou le complexe selon l'exemple, comportera en association en face avant et en face arrière des parois telles que des films métalliques étanches. Ces parois étanches empêchent non seulement les gaz résultant du réchauffement et de la combustion de sortir, mais surtout interdiront à l'oxygène permettant la combustion de pénétrer et de s'approcher des produits combustibles. Dans une version encore plus élaborée, on installera à l'intérieur du matériau des composés extrêmement hydrophiles tels que des silicagels ou des chlorures de calcium et autres déshydratants énergiques, qui auront été préalablement totalement hydratés.

Ces déshydratants seront humidifiés au maximum, et ainsi lorsqu'on les chauffera, ils dégageront de l'eau qui assurera la protection incendie tel que décrit précédemment.

On pourra également humidifier les matériaux intérieurs tels que la laine de mouton. On pourra également garnir les agents intérieurs de tensioactifs qui auront ainsi tendance à conserver le matériau humide, à répartir l'eau et à l'étaler partout sur la surface de tout le complexe au lieu de laisser l'eau se condenser en gouttelettes non jointives.

Les composants du complexe pourront être fixés entre eux par ultrasons.

En effet, l'ultrason est une méthode qui permet de faire une fixation sans perforation.

Il est en effet intéressant que l'oxygène ne puisse pas arriver, que la paroi avant soit totalement étanche, et que les gaz se dégageant en cas d'échauffement ne puissent pas sortir.

La soudure à ultrasons est le bon moyen pour obtenir cette étanchéité, encore que les autres moyens de soudure présentent des résultats approchants.

Au cas où les matériaux utilisés, tels que la laine de mouton, les plumes, ne soient pas soudables par nature, on incruste ces fibres dans du polypropylène « cast » qui lui permettra la réalisation de lignes ou de points de soudures d'une résistance mécanique suffisante.

On pourra réaliser ces incrustations sur des rubans de polypropylène « cast », qui est un matériau fusible aux ultrasons.

On sait que la laine de mouton, les plumes et autres matériaux animaux, sont pratiquement insoudables en ultrasons.

Dans une version intéressante, on installera de chaque côté de la sonotrode, une chenillette dont le déplacement accompagnera le déplacement du complexe.

La pression maintenue par cette chenillette maintiendra l'ensemble sous pression pendant le temps nécessaire au refroidissement des matériaux chauffés par la soudure. Ceci évitera que l'élasticité des fibres ne provoque une qualité de soudure insuffisante.

Les isolants tels que les fibres minérales, se voient souvent reprochés dans leur utilisation en toiture, de provoquer la pourriture des charpentes, et là prolifération dé parasites nuisibles.

Pour ne pas être soumis à de semblables reproches, l'isolant selon l'exemple est en contact avec la charpente, par une partie à base de cuivre utilisée pour ses caractéristiques anti-cryptogamiques, antiphycologiques; anti-phytobiologiques, et également pour ses caractéristiques électromagnétiques réflectives.

### Exemple 3 : structure isolante avec contrôle renforcé de l'humidité.

Cette structure a pour but non seulement de réduire les pertes thermiques, mais surtout d'améliorer les conforts physiologiques des habitations, en pouvant procéder à la régulation des divers transferts d'énergie thermique que l'on constate dans une habitation.

On sait en effet que la totalité des isolants thermiques existants sur le marché réduisent les transferts par conduction contact, tels que: les fibres minérales, la laine de verre, la laine de roche, la laine des laitiers de hauts fourneaux, etc... , ou les isolants alvéolaires à base de polystyrène, polyuréthanne expansés et autres matériaux alvéolaires.

Ces matériaux souffrent d'une grande fragilité et d'une grande sensibilité à l'eau et à l'humidité toujours présentes. L'eau en effet transforme complètement les caractéristiques d'isolation des laines minérales en augmentant la conductivité, et surtout en augmentant les transmissions par rayonnements d'une fibre à l'autre puisque l'eau est un corps noir.

Pour lutter contre ces inconvénients qui anéantissent complètement les caractéristiques d'isolation dé la laine de verre, les fabricants ont trouvé comme solution de mettre un pare-vapeur sous forme de papier goudronné en général.

Les isolants habituels sont donc tous garnis d'un pare-vapeur à mettre du côté chaud. Or, dans une habitation le côté chaud en été est vers l'extérieur sous la toiture, et en hiver vers l'intérieur de la maison.

Conformément au présent exemple, on dispose vers la partie intérieure de la maison, un matériau hydrorégulateur. En effet, les variations d'humidité à l'intérieur d'une maison sont une grande source d'inconfort.

Au vu de ce problème, on vise à doubler l'isolant thermique d'un matériau qui absorbe l'excès d'humidité lorsque la pièce est très humide, et qui relâche cette humidité lorsque l'habitation est plus sèche.

Ce matériau isolant thermique ajoute ainsi le confort d'une régulation de l'hygroscopicité de la pièce.

Pour obtenir ce résultat, on utilise de la fibre naturelle telle que fibre de laine de mouton, des plumes et autres poils naturels.

Indépendamment des caractéristiques d'isolations thermiques bien connues et des réductions des transferts d'énergie thermique des isolants fibreux, on utilise les caractéristiques de la laine de mouton, et de préférence de la laine de mouton noire.

Ces fibres naturelles pourront être utilisées soit pures, soit mélangées avec d'autres fibres naturelles ou synthétiques de façon à en augmenter les caractéristiques.

En particulier, la laine de mouton noire est très appréciée car elle est difficile à teindre.

De plus, cette laine de mouton noire est crépue ce qui en améliore l'avantage pour le présent exemple.

L'avantage d'utiliser des fibres de laine de mouton noire, est que ces fibres ont un très bon rendement thermique vis-à-vis des films réflecteurs.

Il a été remarqué que le fait d'ajouter un séparateur noir absorbant l'énergie, améliorait le rendement de l'ensemble du matériau.

De la même manière, il a été remarqué que le mélange de composants très absorbeurs et émetteurs du rayonnement thermique avec des matériaux non émetteurs réflecteurs augmentait l'ensemble des performances d'isolation et de réduction des transferts thermiques du complexe.

On a pu en effet constater de manière très surprenante que le mélange des fibres les plus hétéroclites possibles donnait de meilleurs résultats d'isolation non seulement phonique mais également thermique.

A cette fin, on peut donc utiliser les plumes, plumules, duvet à barbules creuses d'oiseaux mélangés à d'autres fibres animales telles que laine de mouton, cette dernière possédant des écailles.

On constituera ces mélanges en associant des fibres synthétiques, creuses ou non hydrophiles en mélangeant toutes les matières possibles: espèces, couleurs, textures, dimensions des fibres.

Ce mélange hétéroclite a pour but et avantage de favoriser les "décohérencements" des transmissions d'énergie en multipliant toutes les hétérogénéités radiatives mécaniques et autres.

Le fait de mélanger les dimensions et caractéristiques mécaniques de ces fibres, offre l'avantage d'additionner les qualités de feutrabilité, d'élasticité, de résilience, de mémoire de forme des différentes fibres utilisées.

Il est également très intéressant de mélanger des fibres d'hygroscopicités différentes.

En effet, les fibres hygroscopiques mouillées se présentent comme des corps noirs qui absorbent et émettent totalement le rayonnement infrarouge, alors que les fibres non hydrophiles n'absorbent ni n'émettent le rayonnement infrarouge.

Il est particulièrement intéressant d'utiliser les laines de mouton dont certaines sont spiralées et crépues, ce qui permet d'obtenir un meilleur accrochage des fibres. Cet avantage est utilisé notamment dans les feutres.

Dans une solution particulièrement intéressante pour obtenir la régulation de l'équilibre d'hygroscopicité du bâtiment, ces fibres seront aiguilletées sur un film support par les techniques habituelles de l'aiguilletage.

En outre, au lieu d'effectuer un aiguilletage complet sur toute la largeur, on retirera les aiguilles de la machine à aiguilleter pour n'obtenir l'aiguilletage que sur les bandes parallèles. A titre d'exemple, on pourra avoir une zone de 5 cm aiguilletée suivie d'une zone de 2 cm non aiguilletée, suivie d'une zone de 5 cm aiguilletée, suivie d'une zone de 2 cm non aiguilletée, etc...

L'aiguilletage est en effet un moyen de disposer une partie des fibres perpendiculairement à la nappe, ce qui non seulement apporte un plus grand gonflant, mais surtout dispose des fibres en parallèle à la direction du champ thermique.

On a ainsi une réduction des transmissions par induction vibratoire électromagnétique de l'énergie depuis les deux faces de l'isolant.

L'avantage de l'aiguilletage est qu'il supprime toutes les colles qui servent à fixer les isolants fibreux

Un autre avantage de l'aiguilletage est qu'il oriente les fibres de manière complètement désordonnée dans l'isolant. On a ainsi des fibres qui sont déposées parallèles par l'étaleur, et des fibres qui seront orientées perpendiculairement par l'aiguilleteur.

Ainsi, cette disposition permet de "décohérencer" la transmission des énergies à l'intérieur de l'isolant thermique.

Pour cela, on multiplie les différences et les hétérogénéités des propriétés radiatives, mécaniques et des différents isolants de façon à ce que les rayonnements se contrarient l'un l'autre, et ainsi puissent s'annuler en étant en périodes et phases opposées à l'intérieur cas l'isolant.

L'avantage de l'hétérogénéité des fibres est également d'augmenter la "feutrabilité", l'élasticité etla résilience des différents matériaux composants.

La laine de mouton est particulièrement intéressante car elle a une structure en écailles particulièrement hétérogène et que certaines laines de mouton sont spiralées, ce qui en améliore spontanément l'accrochage d'une fibre à l'autre sans que l'on ai besoin d'utiliser de colle.

Cette caractéristique offre également l'avantage que les liaisons mécaniques internes s'améliorent avec le temps et en particulier avec les vibrations phoniques toujours présentes dans l'isolation thermique destinée au bâtiment.

Un des grands inconvénients des isolants habituels épais est qu'ils sont composés d'une seule épaisseur importante du même matériau.

Dans le cas des isolants fibreux, ceux-ci offrent l'inconvénient majeur qu'une différence de température un tant son peu importante provoque une convection à l'intérieur du produit lui-même.

Cette convection peut avoir lieu dans le sens de l'épaisseur de l'isolant lui-même. C'est d'ailleurs une des raisons pour laquelle dans toutes les normes de mesures des isolants fibreux on installe toujours la plaque chaude au-dessus.

Cette manipulation particulière offre l'avantage de supprimer l'effet et les conséquences de la convection à l'intérieur de l'isolant lors de la mesure normalisée.

Cette convection peut également avoir lieu sur le plan vertical dans le cas des isolants disposés verticalement.

Pour contrecarrer cette tendance naturelle à la convection de l'air chaud à l'intérieur d'un intérieur fibreux on sépare la masse de l'isolant en strates successives étanches.

Chacune de des strates a une épaisseur inférieure à 5 mm ; de façon à ne pas laisser apparaître ou à supprimer toute tendance à la convection interne dans les isolants fibreux. Le Complexe isolant sera donc sous-divisé en plusieurs strates étanches, l'étanchéité étant obtenue par l'utilisation de films de préférence métallisés ou métalliques.

Ainsi, comme le montre la figure 6, on aura une succession de strates composées de deux films métallisés ou métalliques réflecteurs 5 face à face séparés par une épaisseur de matériaux fibreux 8, ou de matériaux alvéolaires.

L'avantage le l'utilisation, des films métalliques ou métallisés est qu'ils assurent une très bonne étanchéité de l'ensemble d'une strate à l'autre, ce qui évite les migrations de l'humidité toujours désastreuses.

L'avantage d'utiliser une succession de films métalliques réflecteurs et de fibres de toutes natures, est que la transmission d'un film réflecteur à l'autre est particulièrement difficile grâce au "décohérencement" des énergies radiatives internes.

Dans une réalisation particulière, on mettra en oeuvre des strates successives différentes qui sont composées d'une succession de strates de matériaux alvéolaires hydrophobes tels que mousse de polyoléfine et de strates de fibres animales, naturelles ou synthétiques. Dans le but de "décohérencer" complètement les transmissions d'énergie à l'intérieur de l'isolant, on utilise de préférence des mousses de matières alvéolaires les plus différentes possibles en strates successives; par exemple une couche de mousse de polyoléfine, une couche de mousse de polystyrène, etc... en veillant à ce que les couches successives soient complètement différentes. La différence pourra être encore augmentée en faisant se suivre une couche de matière transparente et une couche de matière noire à l'infrarouge.

L'avantage supplémentaire de la mise en place de films métalliques ou métallisés est que ces films sont des barrières à la progression des parasites, tels que termites, mites et autres destructeurs du bâtiment.

Dans une réalisation particulière, on utilisera des films métalliques ou métallisés réflecteurs séparateurs qui auront été préalablement, partiellement ou totalement gaufrés.

L'avantage du gaufrage est qu'il augmente le volume apparent, donc constitue une lame d'air sans apport de matière support.

Un autre avantage est qu'un film gaufré "décohérence" encore plus les rayonnements intérieurs de façon à favoriser les frottements internes et les déphasages parasites utiles à l'augmentation des caractéristiques isolantes.

On connaît les inconvénients que représente la mise en place des isolants thermiques habituels dans le bâtiment en raison des risques d'incendie.

Le complexe d'isolation selon exemple utilise une mise en oeuvre complètement différente des techniques habituelles en ce sens que l'on dispose devant l'isolant, une épaisseur de fibres difficilement inflammables non tassées.

Cette épaisseur de fibres est portée par un film métallique renforcé sur un support ignifugé, et elle est dirigée vers la zone exposée au risque d'incendie.

Ainsi, cette épaisseur de fibres très mauvais conducteur, éloigne l'ensemble de l'isolant de l'échauffement du à l'incendie.

Il suffit d'utiliser des fibres ignifugées ou difficilement inflammables; cette épaisseur de fibres sert uniquement de séparateur de façon à pouvoir protéger le reste de l'isolant.

Dans une autre réalisation particulière, on utilisera des fibres animales telles que fibres de laine de mouton ou des plumes naturelles ou ignifugées, en raison du fait que ces fibres animales soient non fusibles et qu'en cas d'incendie elles se recroquevillent et s'agglutinent les unes sur les autres sans provoquer la chute de gouttes enflammées.

L'avantage de l'utilisation de ces fibres animales non fusibles, est qu'en cas d'incendie, elles retiendront les gouttes des matériaux fusibles qui se trouveraient à l'intérieur.

Ces fibres animales offrent égaiement la caractéristique qu'en cas d'échauffement brutal, elles conservent une structure recroquevillée qui continue à remplir son office de séparateur, alors que les fibres minérales et autres matériaux fusibles perdent totalement leur dimensionnement et s'écoulent en gouttes enflammées qui vont transmettre le feu ailleurs.

Cette caractéristique de remarquable résistance à l'incendie est encore améliorée cette épaisseur de fibres est portée par un film métallique renforcé sur un support non combustible, et que cette face est dirigée vers la zone exposée aux risques d'incendie et d'inflammation.

Pour obtenir de meilleurs résultats de réduction des transferts thermiques, il a été constaté de manière très surprenante qu'il était tout à fait intéressant de faire se succéder des strates de matériaux de caractéristiques totalement différentes, par exemple une strate de matériaux fibreux non fusibles difficilement inflammables, une strate de matériaux alvéolaires ignifugés, ces différentes strates étant séparées entre elles par des films métalliques résistant au feu. Ces films métalliques interdisent non seulement l'arrivée de l'oxygène, mais encore et surtout elles maintiennent en place les gaz de combustion qui jouent alors le rôle de gaz extincteurs. Ces gaz sont enfermés à l'intérieur des différentes strates et interdisent la propagation de l'incendie.

On constate qu'un matériau qui est composé d'une succession de strates de matériaux alvéolaires ignifugés, de strates de fibres naturelles enfermées entre des parois métalliques résiste beaucoup mieux, à épaisseur totale équivalente, que des matériaux de la même nature réalisés en une strate d'une épaisseur totale unique.

La composition plurielle de ce nouvel isolant permet de réaliser des matériaux absorbant dispersant phoniques en utilisant des fibres non lisses dé diamètre, de texture, de nature les plus hétéroclites possible, de façon à augmenter le "décohérencement", la dispersion de la transmission des ondes phoniques, et ainsi leur absorption.

On sait déjà réaliser des isolants monostrates par coutures tels que les couettes et autres dessus de lits.

La technique de la couture offre l'inconvénient que l'on perfore les composants et que ces perforations favorisent l'entrée de l'humidité et surtout réduisent considérablement la résistance au feu en raison de l'absence d'étanchéité provoquée par les perforations.

Dans l'exemple, on réalise la liaison des divers composants entre eux telle que par soudures par ultrasons haute fréquence et autres.

Pour obtenir une bonne soudure et une bonne adhérence des produits entre eux, il est essentiel de les disposer de sorte que l'on puisse toujours avoir à proximité des matériaux compatibles en soudabilité.

On sait en particulier que les fibres animales ne sont pas soudables , pour les rendre soudables, l'exemple propose de disposer de chaque côté un polypropylène « cast ».

Lors de la soudure, le polypropylène « cast » fondra au travers des fibres animales qui seront écrasées et assurera ainsi la soudure.

La soudure à ultrasons présente des avantages tout à fait intéressants en raison des cadences de fabrication qu'elle permet, et l'excellente étanchéité que l'on peut obtenir.

La soudure à ultrasons permet en particulier d'ajouter à l'isolant tous les moyens propres à contrecarrer les différents tiers vecteurs d'inconforts et de transferts parasites d'énergie tels que les courants d'air, les reprises et relâchements d'humidité, ainsi que la fragilité mécanique.

La soudure à ultrasons permet en effet d'ajouter des grilles de renfort, des absorbeurs, et tous autres matériaux ou composants utiles.

Selon un mode de réalisation plus particulièrement destiné à la protection solaire et au confort des pièces vitrées telles que les vérandas et atriums, l'isolant objet de l'exemple comportera, sur sa face exposée au soleil, un film réflecteur qui résiste au rayonnement ; ce film réflecteur aura pour effet de renvoyer vers l'extérieur le rayonnement solaire.

Sur la face dirigée vers l'intérieur, le complexe objet de la présente invention, pourra comporter un tissu décoratif qui masquera la première couche de fibres aiguilletées sans en réduire les capacités de régulation de l'hygroscopicité, et surtout sans diminuer les caractéristiques isolantes de l'ensemble du complexe.

On sait en effet qu'un des principaux inconvénients des vérandas et autres pièces vitrées, est la condensation énorme et la très grande variation d'humidité.

L'avantage d'une régulation d'hygroscopicité est que celle-ci absorbe l'humidité excessive pour la relâcher lorsque la pièce est trop sèche ou lorsqu'il fait trop chaud.

Dans une réalisation particulièrement intéressants et destinée à l'isolation des sous-toitures, l'isolant selon la présente invention sera doublé sur sa face destinée à être vue par le dessous de la tuile par un film de matière plastique noire. Ce film de matière plastique noire absorbera le rayonnement émis par le dos de la tuile et s'échauffera. En s'échauffant, il favorisera la convection naturelle de l'air sous la tuile et ainsi son élimination plus rapide.

En outre, le film noir préservera le premier film réflecteur de la salissure toujours présente en sous-toiture.

Ce film noir sera étanche à l'humidité par tous moyens connus; il pourra être doublé d'un séparateur thermique évitant les transferts d'énergie vers le premier film réflecteur.

Il est claire que les caractéristiques et variantes des différents exemples peuvent se combiner, tant au niveau de la composition des couches décrites que de la combinaison de ces couches, selon les applications envisagées.

On peut éventuellement remplacer les mousses par des films à bulle sous pression gazeuse.

Le gaz sous pression peut être autre que l'air, par exemple un gaz non comburant tel que l'azote ou l'oxyde de carbone.

## Revendications

1. Matériau isolant complexe comportant plusieurs couches de matériaux différents, assemblées selon une structure stratifiée et dont l'une (8) au moins desdites couches, dite couche hygrorégulatrice, est en un matériau fibreux, dit matériau hygrorégulateur, choisi parmi les matériaux fibreux d'origine animale et le chanvre, **caractérisé en ce que** lesdites couches sont soudées entre elles et **en ce qu'**un polypropylène "cast" est associé à la couche hygrorégulatrice.

2. Matériau selon la revendication 1, **caractérisé en ce que** ledit matériau hygrorégulateur (8) est de la laine.

3. Matériau selon la revendication 2, **caractérisé en ce que** la laine est de la laine noire crépue.

4. Matériau selon la revendication 1, **caractérisé en ce que** ledit matériau hygrorégulateur (8) est à base de plumes d'oiseaux.

5. Matériau selon l'une des revendications 1 à 4, **caractérisé en ce que** le matériau hygrorégulateur (8) est un mélange de fibres animales hétéroclites choisies parmi les plumes, plumules, duvet à barbules creuses d'oiseaux, laine de mouton.

6. Matériau selon l'une des revendications 1 à 5, **caractérisé en ce que** le matériau hygrorégulateur (8) est un mélange de fibres d'hygroscopicités différentes.

7. Matériau selon l'une des revendications 1 à 6, **caractérisé en ce que** ledit matériau hygrorégulateur (8) comprend des fibres liées entre elles par thermoliage au moyen de fibres et/ou de particules de matière thermofusible choisie parmi : polyester, polypropylène, co-polyester, co-polyamide, co-polyoléfine.

8. Matériau selon l'une des revendications 1 à 7, **caractérisé en ce que** le polypropylène « cast » est thermolié autour des fibres constitutives du matériau hygrorégulateur (8).

9. Matériau selon l'une des revendications 1 à 8, **caractérisé en ce que** le polypropylène « cast » est associé à la couche hygrorégulatrice (8) sous forme de ruban à l'endroit des soudures.

10. Matériau selon la revendication 9, **caractérisé en ce que** les fibres du matériau hygrorégulateur (8) sont incrustées sur les rubans de polypropylène « cast ».

11. Matériau selon l'une des revendications 1 à 10, **caractérisé en ce que** la couche hygrorégulatrice (8) est aiguilletée sur au moins une partie de sa surface afin de présenter une prépondérante de fibres orientées perpendiculairement au plan général de la couche.

12. Matériau selon la revendication 11, **caractérisé en ce que** les parties aiguilletées de la couche hygrorégulatrice (8) sont disposées sur un support réfléchissant.

13. Matériau selon l'une des revendications 1 à 12, **caractérisé en ce qu'**il comporte au moins une couche métallisée (5 ; 30).

14. Matériau selon la revendication 13, **caractérisé en ce que** ladite couche (5 ; 30) est métallisée sur un support en polypropylène "cast".

15. Matériau selon la revendication 13 ou 14, **caractérisé en ce que** la couche (5 ; 30) est métallisée sur ses deux faces ou est en métal massif (3).

16. Matériau selon l'une des revendications 13 à 15, **caractérisé en ce que** chaque film métallique (5 ; 30) est recouvert d'un matériau de protection fusible permettant également la soudure du film.

17. Matériau selon l'une des revendications 1 à 16, **caractérisé en ce qu'**il comporte une pluralité de couches de matériau alvéolaire ondulées (7).

18. Matériau selon l'une des revendications 1 à 17, **caractérisé en ce qu'**il comporte en outre au moins un film à bulles (2) dont l'épaisseur est de l'ordre de 0,75 mm à 8 mm, et de préférence de 2 mm à 5 mm.

19. Matériau selon l'une des revendications 1 à 18, **caractérisé en ce qu'**il comporte un film (1) absorbeur du rayonnement thermique.

20. Matériau selon la revendication 19, **caractérisé en ce que** ledit film absorbeur (1) est disposé au-dessus d'un film à bulles (2), lui-même disposé au-dessus d'un film métallique massif (3).

21. Matériau selon l'une des revendications 1 à 20, **caractérisé en ce que** la couche hygrorégulatrice (8) est soutenue par une grille de maintien (9) dont le maillage présente une ouverture de 5 mm à 50 mm et de préférence de 10 mm à 12 mm.

22. Matériau selon l'une des revendications 1 à 21, **caractérisé en ce que** les parties du matériau isolant en-dehors des bords ne sont soudées que par points successifs séparés, de façon à limiter les ponts thermiques.

23. Matériau selon l'une des revendications 1 à 22, **caractérisé en ce qu'**il comporte une couche de matière adhésive (20) tournée vers l'extérieur, destinée à piéger des particules de matériau nocives.

24. Matériau selon l'une des revendications 1 à 23, **caractérisé en ce qu'**il incorpore une résistance électrique de chauffage à proximité de la face (28) destinée à être tournée vers l'intérieur.

25. Matériau selon l'une des revendications 1 à 24, **caractérisé en ce qu'**il comporte un complexe d'isolation contre les flammes comportant une succession de films métalliques minces (30) séparés entre eux par des grilles fusibles ou des points de soudure (32) établissant une lame d'air.

26. Matériau selon la revendication 25 ou 13, **caractérisé en ce qu'**au moins un des films métalliques (30) ou une des couches métallisées est relié électriquement à la terre (34).

27. Matériau selon l'une des revendications 1 à 26, **caractérisé en ce qu'**il comporte une alternance de films métalliques et de matelas de fibres non combustibles.

28. Matériau selon l'une des revendications 1 à 27, **caractérisé en ce qu'**il comporte des couches de matériaux ignifuges hydratés à base de minéraux poly-hydratés, comme le poly-hydroxyde d'aluminium, le gypse, le borax hydraté, le sulfate de calcium hydraté, le silicate de magnésium hydraté, le silicate de sodium et les sulfates d'aluminium.

29. Matériau selon la revendication 28, **caractérisé en ce que** lesdites couches ignifuges sont retenues entre des films métalliques étanches.

30. Matériau selon l'une des revendications 1 à 29, **caractérisé en ce qu'**il comporte un ensemble de couches d'isolant séparées par des strates successives étanches réalisées par des films séparateurs métalliques gaufrés.

31. Procédé de fabrication d'un matériau isolant complexe selon l'une quelconque des revendications précédentes, **caractérisé en ce que** la soudure est réalisée par des molettes de soudure motrices.

32. Procédé selon la revendication 31, **caractérisé en ce que** les molettes sont crantées permettant d'obtenir une succession de points soudés séparés par des parties non soudées.

33. Procédé selon la revendication 31 ou 32, **caractérisé en ce que** l'on rend active l'enclume des têtes génératrices d'énergie de soudure afin de permettre de mettre l'enclume de la tête de soudure en résonance avec la tête principale.

## Claims

1. Complex insulating material comprising a plurality of layers of different materials which are joined together in a stratified structure and at least one (8) of said layers, called the hygroregulatory layer, is made of a fibrous material, called hygroregulatory material, selected from fibrous materials of animal origin and hemp, **characterised in that** said layers are welded together and **in that** a cast polypropylene is associated with the hygroregulatory layer.

2. Material according to claim 1, **characterised in that** said hygroregulatory material (8) is wool.

3. Material according to claim 2, **characterised in that** the wool is black napped wool.

4. Material according to claim 1, **characterised in that** said hygroregulatory material (8) is based on birds' feathers.

5. Material according to any one of claims 1 to 4, **characterised in that** the hygroregulatory material (8) is a mixture of heteroclitic animal fibres selected from feathers, plumules, down with hollow barbs from birds, sheep's wool.

6. Material according to any one of claims 1 to 5, **characterised in that** the hygroregulatory material (8) is a mixture of fibres of different hygroscopicities.

7. Material according to any one of claims 1 to 6, **characterised in that** said hygroregulatory material (8) comprises fibres which are bonded together by thermobonding by means of fibres and/or particles of thermofusible material selected from: polyester, polypropylene, copolyester, copolyamide, copolyolefin.

8. Material according to any one of claims 1 to 7, **characterised in that** the cast polypropylene is thermobonded around the fibres constituting the hygroregulatory material (8).

9. Material according to any one of claims 1 to 8, **characterised in that** the cast polypropylene is associated with the hygroregulatory layer (8) in the form of a tape at the location of the welds.

10. Material according to claim 9, **characterised in that** the fibres of the hygroregulatory material (8) are overlaid on the cast polypropylene tapes.

11. Material according to any one of claims 1 to 10, **characterised in that** the hygroregulatory layer (8) is needled on at least a portion of its surface in order to have a preponderance of fibres oriented perpendicularly to the general plane of the layer.

12. Material according to claim 11, **characterised in that** the needled portions of the hygroregulatory layer (8) are arranged on a reflective substrate.

13. Material according to any one of claims 1 to 12, **characterised in that** it comprises at least one metallised layer (5; 30).

14. Material according to claim 13, **characterised in that** said layer (5; 30) is metallised on a substrate of cast polypropylene.

15. Material according to claim 13 or 14, **characterised in that** the layer (5; 30) is metallised on its two faces or is made of solid metal (3).

16. Material according to any one of claims 13 to 15, **characterised in that** each metallic film (5; 30) is covered with a fusible protective material which also permits welding of the film.

17. Material according to any one of claims 1 to 16, **characterised in that** it comprises a plurality of rippled layers of cellular material (7).

18. Material according to any one of claims 1 to 17, **characterised in that** it further comprises at least one bubble film (2), the thickness of which is of the order of from 0.75 mm to 8 mm, preferably from 2 mm to 5 mm.

19. Material according to any one of claims 1 to 18, **characterised in that** it comprises a film (1) which absorbs thermal radiation.

20. Material according to claim 19, **characterised in that** said absorbing film (1) is arranged above a bubble film (2), which is itself arranged above a solid metallic film (3).

21. Material according to any one of claims 1 to 20, **characterised in that** the hygroregulatory layer (8) is held by a holding grid (9), the mesh of which has an opening of from 5 mm to 50 mm, preferably from 10 mm to 12 mm.

22. Material according to any one of claims 1 to 21, **characterised in that** the parts of the insulating material outside the edges are welded only by successive separate points, in order to limit thermal bridges.

23. Material according to any one of claims 1 to 22, **characterised in that** it comprises an outwardly facing layer of adhesive material (20), which is intended to trap harmful material particles.

24. Material according to any one of claims 1 to 23, **characterised in that** it includes an electric heating resistor close to the face (28) which is to face inwards.

25. Material according to any one of claims 1 to 24, **characterised in that** it comprises a complex providing insulation against flames comprising a succession of thin metallic films (30) separated by fusible grids or welding points (32) which establish an air space.

26. Material according to claim 25 or 13, **characterised in that** at least one of the metallic films (30) or one of the metallised layers is connected electrically to earth (34).

27. Material according to any one of claims 1 to 26, **characterised in that** it comprises alternating metallic films and non-combustible fibre mats.

28. Material according to any one of claims 1 to 27, **characterised in that** it comprises layers of hydrated flame-retardant materials based on polyhydrated minerals, such as aluminium polyhydroxide, gypsum, hydrated borax, hydrated calcium sulfate, hydrated magnesium silicate, sodium silicate and aluminium sulfates.

29. Material according to claim 28, **characterised in that** said flame-retardant layers are retained between impervious metallic films.

30. Material according to any one of claims 1 to 29, **characterised in that** it comprises an assembly of insulating layers separated by successive impervious strata formed of embossed metallic separator films.

31. Process for the production of a complex insulating material according to any one of the preceding claims, **characterised in that** welding is carried out by motorised welding rollers.

32. Process according to claim 31, **characterised in that** the rollers are serrated, allowing a succession of welded points separated by non-welded portions to be obtained.

33. Process according to claim 31 or 32, **characterised in that** the anvils of the heads generating energy for welding are made active in order to allow the anvil of the welding head to be brought into conformity with the main head.

## Patentansprüche

1. Komplexes Isoliermaterial bestehend aus verschiedenen Materialschichten, die gemäß einer laminierten Struktur zusammengesetzt sind, und von denen mindestens eine (8) der genannten Schichten, die so genannte wasserregelnde Schicht, aus einem faserigen Material besteht, die unter faserigen Materialien tierischer Herkunft und Hanf gewählt wird, **dadurch gekennzeichnet, dass** die genannten Schichten miteinander verschweißt werden, und dass der wasserregelnden Schicht ein Polypropylen "cast" zugeordnet ist.

2. Material gemäß Anspruch 1, **dadurch gekennzeichnet, dass** das genannte wasserregelnde Material (8) Wolle ist.

3. Material gemäß Anspruch 2, **dadurch gekennzeichnet, dass** die Wolle eine krause schwarze Wolle ist.

4. Material gemäß Anspruch 1, **dadurch gekennzeichnet, dass** das genannte wasserregelnde Material (8) auf Basis von Vogelfedern ist.

5. Material gemäß einem der Ansprüche 1 bis 4, **dadurch gekennzeichnet, dass** das wasserregelnde Material (8) eine Mischung von uneinheitliche tierischen Fasern ist, die unter Federn, Flaumfedern, hohlem Sprossknospenflaum von Vögeln, Schafswolle gewählt werden.

6. Material gemäß einem der Ansprüche 1 bis 5, **dadurch gekennzeichnet, dass** das wasserregelnde Material (8) eine Mischung von Fasern mit verschiedenen Hydroskopizitäten ist.

7. Material gemäß einem der Ansprüche 1 bis 6, **dadurch gekennzeichnet, dass** das genannte wasserregelnde Material (8) Fasern umfasst, die per Wärmeverbindung miteinander verbunden sind, anhand von Fasern und/oder wärmeschmelzenden Stoffpartikeln, gewählt unter: Polyester, Polypropylen, Kopolyester, Kopolyamid, Kopolyolefin.

8. Material gemäß einem der Ansprüche 1 bis 7, **dadurch gekennzeichnet, dass** das Polypropylen "cast" um die Fasern des wasserregelnden Materials (8) herum wärmeverbunden ist.

9. Material gemäß einem der Ansprüchen 1 bis 8, **dadurch gekennzeichnet, dass** das Polypropylen "cast" mit der wasserregelnden Schicht (8) in Form eines Streifens an den Schweißnähten entlang verbunden ist.

10. Material gemäß Anspruch 9, **dadurch gekennzeichnet, dass** die Fasern des wasserregelnden Materials (8) in den Streifen aus Polypropylen "cast" inkrustiert sind.

11. Material gemäß einem der Ansprüche 1 bis 10, **dadurch gekennzeichnet, dass** die wasserregelnde Schicht (8) an mindestens einem Teil ihrer Oberfläche genadelt ist, um vorrangig Fasern aufzuweisen, die senkrecht zur Hauptebene der Schicht ausgerichtet sind.

12. Material gemäß Anspruch 11, **dadurch gekennzeichnet, dass** die genadelten Teile der wasserregelnden Schicht (8) auf einem spiegelnden Träger angeordnet sind.

13. Material gemäß einem der Ansprüche 1 bis 12, **dadurch gekennzeichnet, dass** es mindestens eine metallisierte Schicht (5; 30) umfasst.

14. Material gemäß Anspruch 13, **dadurch gekennzeichnet, dass** die genannte Schicht (5; 30) auf einem Träger aus Polypropylen "cast" metallisiert ist.

15. Material gemäß Anspruch 13 oder 14, **dadurch gekennzeichnet, dass** die Schicht (5; 30) auf ihren beiden Seiten metallisiert ist oder aus massivem Metall (3) besteht.

16. Material gemäß einem der Ansprüche 13 bis 15, **dadurch gekennzeichnet, dass** jede Metallfolie (5; 30) mit einem schmelzbaren Schutzmaterial bedeckt ist, das ebenfalls das Schweißen der Folie ermöglicht.

17. Material gemäß einem der Ansprüche 1 bis 16, **dadurch gekennzeichnet, dass** es eine Vielzahl von gewellten Schichten aus wabenförmigem Material (7) umfasst.

18. Material gemäß einem der Ansprüche 1 bis 17, **dadurch gekennzeichnet, dass** es ferner mindestens eine Blasenfolie (2) umfasst, deren Dicke etwa zwischen 0,75 mm und 8 mm liegt, und vorzugsweise zwischen 2 mm und 5 mm.

19. Material gemäß einem der Ansprüche 1 bis 18, **dadurch gekennzeichnet, dass** es eine Folie (1) umfasst, die die Wärmestrahlung absorbiert.

20. Material gemäß Anspruch 19, **dadurch gekennzeichnet, dass** die genannte absorbierende Folie (1) über einer Blasenfolie (2) angeordnet ist, die ihrerseits auf einer Folie aus massivem Metall (3) liegt.

21. Material gemäß einem der Ansprüche 1 bis 20, **dadurch gekennzeichnet, dass** die wasserregelnde Schicht (8) von einem Haltegitter (9) gestützt wird, dessen Maschen eine Öffnung von 5 mm bis 50 mm aufweisen, und vorzugsweise von 10 bis 12 mm.

22. Material gemäß einem der Ansprüche 1 bis 21, **dadurch gekennzeichnet, dass** die Teile des isolierenden Materials außerhalb der Ränder nur mittels aufeinanderfolgender getrennter Punkte verschweißt sind, um Wärmebrücken zu begrenzen.

23. Material gemäß einem der Ansprüche 1 bis 22, **dadurch gekennzeichnet, dass** es eine Kleberschicht (20) umfasst, die nach außen gerichtet ist und schädliche Materialpartikel auffangen soll.

24. Material gemäß einem der Ansprüche 1 bis 23, **dadurch gekennzeichnet, dass** es einen elektrischen Heizwiderstand in der Nähe der Seite (28) umfasst, die nach Innen zeigen soll.

25. Material gemäß einem der Ansprüche 1 bis 24, **dadurch gekennzeichnet, dass** es einen Dämmungskomplex gegen Flammen aufweist, mit aufeinanderfolgenden dünnen Metallfolien (30), die mit schmelzbaren Gittern oder Schweißpunkten (32) voneinander getrennt sind, die einen Luftspalt herstellen.

26. Material gemäß Anspruch 25 oder 13, **dadurch gekennzeichnet, dass** mindestens eine der Metallfolien (30) oder eine der Metallschichten elektrisch mit der Erde (34) verbunden ist.

27. Material gemäß einem der Ansprüche 1 bis 26, **dadurch gekennzeichnet, dass** es abwechselnd Metallfolien und Matten aus nicht brennbaren Fasern umfasst.

28. Material gemäß einem der Ansprüche 1 bis 27, **dadurch gekennzeichnet, dass** es Schichten aus wässrigen feuerfesten Materialen auf Basis von polywässrigen Mineralien umfasst, wie Aluminiumpolyhydroxid, Gips, wässrigen Borax, wässriges Kalziumsulfat, wässriges Magnesiumsilikat, Natriumsilikat und Aluminiumsulfate.

29. Material gemäß Anspruch 28, **dadurch gekennzeichnet, dass** die genannten feuerfesten Schichten zwischen dichten Metallfolien festgehalten werden.

30. Material gemäß einem der Ansprüche 1 bis 29, **dadurch gekennzeichnet, dass** es eine Reihe von Isolierschichten umfasst, die von aufeinanderfolgenden dichten Zwischenschichten getrennt werden, die aus geprägten Metalltrennfolien bestehen.

31. Herstellungsverfahren eines komplexen Isoliermaterials gemäß einem der vorangehenden Ansprüche, **dadurch gekennzeichnet, dass** das Schweißen anhand von Antriebsschweißrollen erfolgt.

32. Verfahren gemäß Anspruch 31, **dadurch gekennzeichnet, dass** die Rollen gezahnt sind, um zu ermöglichen, eine Folge von Schweißpunkten zu erhalten, die durch nicht geschweißte Teile getrennt sind.

33. Verfahren gemäß Anspruch 31 oder 32, **dadurch gekennzeichnet, dass** man den Amboss der die Schweißenergie erzeugenden Köpfe aktiviert, um zu ermöglichen, den Amboss des Schweißkopfes mit dem Hauptkopf in Resonanz zu versetzen.
